Europäisches Patentamt

European Patent Office

Office européen des brevets

(19)

(11) Veröffentlichungsnummer : **0 077 464**
**B1**

(12) **EUROPÄISCHE PATENTSCHRIFT**

(45) Veröffentlichungstag der Patentschrift :
**09.10.85**

(21) Anmeldenummer : **82108499.3**

(22) Anmeldetag : **15.09.82**

(51) Int. Cl.⁴ : **G 03 H  1/08, G 06 K  1/12,
G 07 F  7/08, G 07 D  7/00**

(54) **Kinoform.**

(30) Priorität : **15.10.81 CH 6594/81**

(43) Veröffentlichungstag der Anmeldung :
**27.04.83 Patentblatt 83/17**

(45) Bekanntmachung des Hinweises auf die Patenterteilung : **09.10.85 Patentblatt 85/41**

(84) Benannte Vertragsstaaten :
**AT DE FR GB NL**

(56) Entgegenhaltungen :
**DE-A- 1 957 475
FR-A- 2 279 162
FR-A- 2 297 460
FR-A- 2 395 550
US-A- 4 119 361**

(73) Patentinhaber : **LGZ LANDIS & GYR ZUG AG**

**CH-6301 Zug (CH)**

(72) Erfinder : **Baltes, Heinrich Peter
Zeughausgasse 21
CH-6300 Zug (CH)**
Erfinder : **Romerio, Michel Vincent
14, Grand'Places
CH-1700 Fribourg (CH)**

(74) Vertreter : **Müller, Hans-Jürgen, Dipl.-Ing. et al
Müller, Schupfner & Gauger Lucile-Grahn-Strasse 38
Postfach 80 13 69
D-8000 München 80 (DE)**

EP 0 077 464 B1

## Beschreibung

Die Erfindung bezieht sich auf ein Verfahren zur Erzeugung eines Kinoforms gemäss dem Oberbegriff des Anspruchs 1.

Ein Kinoform solcher Art kann z. B. als synthetisch hergestelltes, maschinenlesbares optisches Echtheitsmerkmal für Wertdokumente verwendet werden.

Als Wertdokumente in diesem Sinne gelten z. B. Banknoten, Schecks, Wertpapiere, Identitätsausweise, Kennkarten, Kreditkarten, Fahrkarten, Eintrittskarten und dergleichen, die in vielen Ländern mehr und mehr in Annahmegeräten maschinell auf Echtheit geprüft werden.

Die meisten dieser Wertdokumente können mit modernen Reproduktionsmitteln mit nicht allzu grossem Aufwand gefälscht werden. Es sind zahlreiche Vorschläge bekannt, die darauf abzielen, auf solchen Wertdokumenten Echtheitsinformationen zu speichern, welche den für eine erfolgversprechende Fälschung erforderlichen Aufwand und damit die Fälschungssicherheit erhöhen. Bekannt ist insbesondere die Aufzeichnung von Echtheitsinformationen in Form von optischen Markierungen, z. B. von Hologrammen, die maschinell gelesen werden können.

Aus der DE-A-1 957 475 ist als gelegentlicher Ersatz für Hologramme das Kinoform bekannt, das unter Beibehaltung der Vorteile eines Hologramms dessen Nachteile nicht besitzt, wie z. B.

das Vorhandensein mehrerer Beugungsordnungen bzw. deren Konjugierten,

die geringe Lichtausbeute und

den aufwendigen und zeitraubenden Rechneraufwand bei rechnergesteuert, synthetisch hergestellten Hologrammen.

Da bisher kein Weg gefunden wurde, ein Kinoform rein optisch zu erzeugen, muss dieses rechnergesteuert synthetisch hergestellt werden.

Die Berechnung eines solchen herkömmlichen Kinoforms benötigt eine Vielzahl diskreter, über die gesamte Fläche der gewünschten Abbildung mehr oder weniger regelmässig verteilter Bildpunkte. Diese Vielzahl von Bildpunkten ist normalerweise, d. h. bei der Wiedergabe bildlicher Darstellungen wie z. B. eines Photos, ein Vorteil, da durch viele Bildpunkte die Auflösung des Bildes verbessert wird.

Im Fall maschinenlesbarer optischer Echtheitsmerkmale ist dagegen dieses Verfahren ohne weiteres in der Regel nicht anwendbar, da die Anzahl M der Bildpunkte klein ist, z. B. $2 \leqslant M \leqslant 50$. Die Strahlungsintensität der M Bildpunkte stellt dabei die M Bit eines M-Bit Codewortes dar, wobei jeder Bildpunkt z. B. zwei diskrete Hell/Dunkel-Werte besitzt. Das Codewort braucht jedoch nicht unbedingt ein Binär-Codewort zu sein, sondern kann auch mehr als zwei diskrete Pegelwerte besitzen und z. B. ein Ternär-Codewort sein.

Der Erfindung liegt die Aufgabe zugrunde, ein Kinoform herzustellen, welches folgende Bedingungen erfüllt :

Möglichkeit der Reproduktion von M diskreten Hell/Dunkel-Bildpunkten einer Abbildung, mit $2 \leqslant M \leqslant 50$.

Möglichkeit, dass die M diskreten Hell/Dunkel-Bildpunkte zusätzlich mit einer beschränkten Anzahl diskreter Grauwerte versehen sind.

Maximale Konzentration der Strahlungsenergie einer das Kinoform bestrahlenden kohärenten Strahlungsquelle in den wenigen M diskreten Bildpunkten.

Die genannte Aufgabe wird erfindungsgemäss durch die im Kennzeichen des Anspruchs 1 angegebenen Merkmale gelöst.

Ein Ausführungsbeispiel der Erfindung ist in der Zeichnung dargestellt und wird im folgenden näher beschrieben. Es zeigen :

Figur 1 eine Anordnung zum Reproduzieren einer Abbildung mittels eines Kinoforms,

Figur 2 ein Diagramm der Strahlungsintensität I der Bildpunkte in Funktion des Raumwinkels δ.

Eine nicht gezeichnete kohärente Strahlungsquelle erzeugt z. B. eine ebene Welle 1 kohärenter Strahlung, die ein z. B. strahlungsdurchlässiges Kinoform 2 beleuchtet, dessen Streufeld auf bekannte Art in der Ebene eines Bildes 3 eine im Kinoform gespeicherte Bildinformation, z. B. des Buchstabens A, reproduziert.

Das Herstellungsverfahren und die Funktionsweise eines Kinoforms ist aus dem angegebenen Stand der Technik bekannt.

Da bei maschinenlesbaren optischen Echtheitsmerkmalen nur wenige M Bit eines Codewortes in Form von Hell-Dunkel-Bildpunkten, mit oder ohne diskrete Grauwerte, vorhanden sind, mit $2 \leqslant M \leqslant 50$, sind die im angegebenen Stand der Technik beschriebenen Berechnungen nicht ohne weiteres realisierbar. Bei so wenigen Bildpunkten, ausser für den in der Praxis wenig interessanten Fall M = 1 ist beim herkömmlichen Kinoform die Einhaltung der sogenannten Kinoform-Bedingung, d. h. das Konstanthalten der Wellenamplituden bzw. der Strahlungsintensitäten in der Kinoform-Ebene, praktisch nicht möglich.

Eine statistische Schätzung der relativen Abweichung von dieser Konstanz zeigt, dass sie annähernd gleich $M^{-1/2}$ ist. Somit ist ersichtlich, dass nur ein grosser Wert von M gleich einigen Hundert Bildpunkten, mit z. B. $M \approx 300$, diese Abweichung erträglich gering hält.

Die Auswertung der Bildpunkte des Echtheitsmerkmals geschieht in der Regel mittels Photodetektoren. Um trotz des kleinen Wertes von M ein Kinoform mit genügender Qualität, d. h. als reines Phasenobjekt zu erhalten, wird die nicht unendlich kleine Detektorgrösse ausgenutzt und die Forderung nach räumlicher Schärfe der M Bildpunkte abgeschwächt. Jeder der M Bildpunkte wird dabei durch einen Bildflecken ersetzt, welcher seinerseits aus N diskreten Bildpunkten besteht, die alle annähernd die gleiche Strahlungsintensität besitzen wie der ursprüngliche, durch den Bildflecken ersetzte Bildpunkt. Die Strahlungsintensität der Bildpunkte innerhalb eines jeden Bildfleckens ist somit annähernd konstant und die Anzahl N der zu wählenden Bildpunkte pro Bildflecken sollte in der Grössenordnung von 50 liegen.

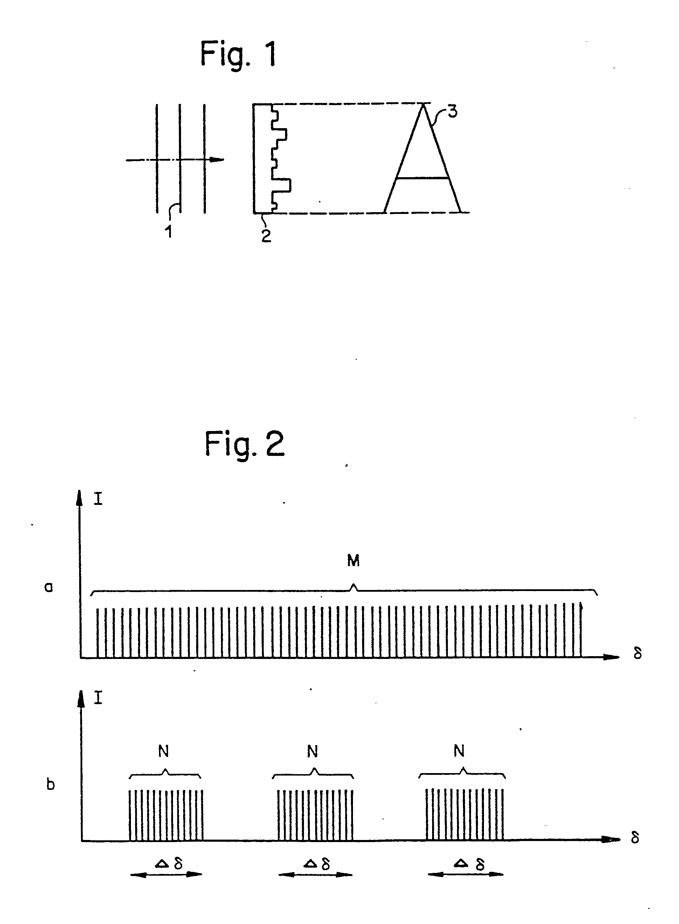

Der Unterschied zwischen einem herkömmlichen und dem abgeänderten Kinoform ist aus der Fig. 2 ersichtlich. In dieser Fig. 2 stellt δ den Raumwinkel eines jeden Bildpunktes und I dessen Strahlungsintensität dar.

Auf der Zeile a ist das vom herkömmlichen Kinoform erzeugte Bild dargestellt. Das entsprechende Kinoform wird berechnet auf der Basis einer grossen Anzahl M von z. B. binären Bildpunkten, die mehr oder weniger gleichmässig über den gesamten zur Verfügung stehenden Raumwinkel verteilt sind.

Auf der Zeile b ist das zur Herstellung des abgeänderten Kinoforms verwendete Ausgangsbild dargestellt, bestehend aus einer kleinen Anzahl Bildflecken — in der Fig. 2 sind es deren drei —, wobei jeder Bildfleck aus N diskreten Bildpunkten besteht, die mehr oder weniger gleichmässig über den für den betreffenden Bildflecken zur Verfügung stehenden Raumwinkel Δδ verteilt sind. Δδ ist allerdings in der Fig. 2 nicht massstabgerecht dargestellt und übergross gezeichnet.

Ein Kinoform ist bekanntlich eine reine Phasenstruktur, die so berechnet ist, dass sie nur gebeugte Strahlen einer einzigen Beugungsordnung erzeugt. Da somit die gesamte Strahlungsenergie der kohärenten Strahlungsquelle in dieser einzigen Beugungsordnung konzentriert ist, ist die Strahlungsausbeute-Effizienz sehr hoch, und es wird eine lichtstarke Abbildung erzeugt. Die ganze Strahlungsenergie der kohärenten Strahlungsquelle wird somit ohne nennenswerte Energieverluste in den wenigen M Bildflecken konzentriert.

Zum Berechnen eines Kinoforms werden zuerst die Strahlungsamplituden des Streufeldes in den einzelnen Bildpunkten des Bildes 3 in der Fig. 1 festgelegt und die Fortpflanzung der Wellenamplitude in Rückwärtsrichtung von der Ebene der Abbildung 3 zur Kinoformebene mittels einer inversen Fouriertransformation berechnet. Jedem Punkt des Streufeldes wird dabei eine beliebige Phase zwischen Null und $2\pi$ zugeordnet, die z. B. statistisch zufallsverteilt mit einer gleichmässigen Verteilungsdichte angenommen wird. Die Punkte des Streufeldes sind im beschriebenen Fall die N diskreten Punkte eines jeden der M Bildflecken.

In der Praxis werden jeweils, z. B. durch Randeffekte und Ungenauigkeiten bei der Herstellung des Kinoforms, die N Bildpunkte zu einem Bildflecken verschmiert, ein hier erwünschter Effekt.

## Patentansprüche

1. Verfahren zur Erzeugung eines Kinoforms, bei dem die Amplitudenverteilungsfunktion einer Vielzahl diskreter Bildpunkte einer durch das Kinoform bei kohärenter Bestrahlung wiederzugebenden Abbildung festgestellt, aufgezeichnet und rechnerisch in die zugeordnete, am Ort des Kinoforms erforderliche Phasenverteilungsfunktion umgewandelt wird, dadurch gekennzeichnet, daß zur Erzeugung eines Kinoforms eines aus M diskreten Hell-/Dunkel-Bildpunkten mit $2 \le M \le 50$ bestehenden Codewortes bei der Feststellung der Amplitudenverteilungsfunktion der wiederzugebenden Abbildung jeder der Bildpunkte durch einen Bildflecken ersetzt wird, welcher seinerseits aus N diskreten Bildpunkten besteht, die alle annähernd die gleiche Strahlungsintensität besitzen, wobei N so gewählt ist, daß das Produkt aus M und N einige Hundert ergibt.

2. Verfahren nach Anspruch 1, dadurch gekennzeichnet, daß jeder der Bildpunkte durch einen aus N diskreten Bildpunkte bestehendem Bildflecken mit N in der Größenordnung von 50 ersetzt wird.

3. Verfahren nach Anspruch 1 oder 2, dadurch gekennzeichnet, daß die diskreten Hell-/Dunkel-Bildpunkte des Codewortes so gebildet werden, daß sie nur zwei diskrete Hell-/Dunkel-Werte besitzen.

4. Verfahren nach Anspruch 1 oder 2, dadurch gekennzeichnet, daß die diskreten Hell-/Dunkel-Bildpunkte des Codewortes so gebildet werden, daß sie mehr als zwei diskrete Pegelwerte besitzen.

5. Verwendung Verfahrens nach einem der Ansprüche 1-4 zur Erzeugung von Echtheitsmerkmalen von Wertdokumenten.

## Claims

1. A method of producing a kinoform wherein the amplitude distribution function of a plurality of discrete picture elements of an image which is to be reproduced by the kinoform upon coherent irradiation, is established, recorded and converted by computer means into the associated phase distribution function which is required at the location of the kinoform characterised in that for the purposes of producing a kinoform of a code word comprising M discrete light/dark picture elements with $2 \le M \le 50$, when establishing the amplitude distribution function of the image to be reproduced, each of the picture elements is replaced by a picture spot which in turn comprises N discrete picture elements which all have approximately the same intensity of radiation, wherein N is so selected that the product of M and N amounts to several hundreds.

2. A method according to claim 1, characterised in that each of the picture elements is replaced by a picture spot comprising N discrete picture elements, with N being of the order of magnitude of 50.

3. A method according to claim 1 or claim 2, characterised in that the discrete light/dark picture elements of the code word are so formed that they have only two discrete light/dark values.

4. A method according to claim 1 or claim 2, characterised in that the discrete light/dark picture elements of the code word are so formed that they have more than two discrete level values.

5. Use of the method according to one of claims 1 to 4 for producing authenticity features on documents representing value.

**Revendications**

1. Procédé pour la production d'un réseau holographique du type kinoforme, dans lequel la fonction de distribution d'amplitude de nombreux points d'image discrets d'une image à reproduire par ledit réseau sous irradiation cohérente est déterminée, enregistrée puis convertie par calcul pour donner la fonction de distribution de phase correspondante, nécessaire à l'emplacement dudit réseau holographique ledit procédé étant caractérisé en ce que pour la production d'un réseau holographique du type kinoforme d'un mot de code constitué par M points d'image discrets de lumière-obscurité, avec $2 \leqslant M \leqslant 50$, chaque point d'image est remplacé lors de la détermination de la fonction de distribution d'amplitude de l'image à reproduire par une tache d'image, constituée par N points d'image discrets présentant tous sensiblement la même intensité énergétique, N étant choisi de façon que le produit M.N soit de quelques centaines.

2. Procédé selon revendication 1, caractérisé en ce que chaque point d'image est remplacé par une tache d'image constituée par N points d'image discrets, N étant de l'ordre de 50.

3. Procédé selon une des revendications 1 ou 2, caractérisé en ce que les points d'image discrets de lumière-obscurité du mot de code sont constitués de façon à ne présenter que deux valeurs discrètes de lumière-obscurité.

4. Procédé selon une des revendications 1 ou 2, caractérisé en ce que les points d'image discrets de lumière-obscurité du mot de code sont constitués de façon à présenter plus de deux valeurs discrètes de niveau.

5. Application du procédé selon une quelconque des revendications 1 à 4, à la production de caractéristiques d'authenticité sur des documents officiels.

# Fig. 1

# Fig. 2